# EUROPEAN PATENT SPECIFICATION

(11) **EP 3 239 043 B1**
(45) Date of publication and mention of the grant of the patent: **28.11.2018**
(21) Application number: 17167104.3
(22) Date of filing: 19.04.2017
(51) Int. Cl.: B64C 13/38, B64C 13/50, B64D 45/00

(54) **SYSTEM AND METHOD FOR CONTROLLING AIRCRAFT WING FLAP MOTION**
SYSTEM UND VERFAHREN ZUR STEUERUNG DER FLÜGELKLAPPENBEWEGUNG EINES FLUGZEUGS
SYSTÈME ET PROCÉDÉ DE COMMANDE DE MOUVEMENT DE VOLET D'AILE D'AÉRONEF

(30) Priority: 25.04.2016 US 201615137826
(43) Date of publication of application: 01.11.2017
(73) Proprietor: The Boeing Company, Chicago, IL 60606-1596 (US)
(72) Inventor: FINN, Michael Raymond, Everett, WA Washington 98204 (US); McCORMICK, Patrick, Mukilteo, WA Washington 98275 (US); MOY, George, Seattle, WA Washington 98124 (US); NGUYEN, Rene Toan, Edmonds, WA Washington 98026 (US)
(74) Representative: Howson, Richard Giles Bentham

(56) References cited:
- WO-A1-2011/110833
- FR-A1- 2 972 175
- US-A1- 2013 009 017
- US-A1- 2013 192 453

## Description

### FIELD OF THE DISCLOSURE

Embodiments of the present disclosure generally relate to a system and method for controlling flap motion of wings of an aircraft.

### BACKGROUND OF THE DISCLOSURE

High-lift systems are utilized on wings of aircraft to increase lift or drag during take-offs and landings. One type of high-lift system includes flaps on trailing edges of the wings. The flaps are moveable control surfaces that may be extended during take-offs and landings, and retracted at cruising speeds.

A variety of actuation systems may be used to extend and retract trailing-edge flaps on a wing. One known type of actuation system includes two drive stations, with each drive station connected to an opposite side of the flap. A distributed actuation system includes a drive station installed on either side of a flap with no mechanical interaction between the drive stations. A known drive station includes a motor, a gear train, and a drive screw that connects to the flap through an arm. The motor (for example, an electric motor) in a drive station turns the drive screw in a forward or reverse direction through the gear train. The drive screw converts the rotation motion of the motor and gear train into a linear motion to impart movement on the arm. As the arm is pushed or pulled by the drive screw, the flap connected to the arm is extended or retracted.

Because a flap is typically actuated by two drive stations, if one drive station moves at a different rate than the other drive station, the flap may skew or twist under sufficient airloads. For example, when the flap is actively extended or retracted by the two drive stations that are moving at different rates, the flap may be susceptible to skewing or twisting.

FR2972175 describes a method for simultaneously controlling actuators for moving at least two aircraft flaps, comprising the steps of: - controlling the actuators to move the flaps to a predetermined position, - during displacement, detecting a slower actuator, - adapting the actuator control to wedge the actuators on the slowest actuator.

WO2011/110833 describes a system for determining whether the relative rate of deployment of all the slats extending from a leading edge of an aircraft wing is the same as a predetermined relative rate of deployment. Each slat includes at least one slat deployment mechanism that includes a drive pinion drivingly coupled to each slat and a rotary actuator having an output shaft, the output shaft being driven by a common input drive shaft via the rotary actuator and being coupled to said drive pinion. The system comprises a sensor associated with each rotary actuator to generate a signal indicative of the rate of rotation of its corresponding output shaft and to supply that signal to a controller. The controller is configured to analyse the signals supplied by the sensors and to generate an alarm signal if a relative rate of rotation of all the output shafts differs from a predetermined relative rate of rotation.

US2013/0009017 describes an electronically-synchronized flap system for a fixed-wing aircraft including a first wing including a first flap panel, the first flap panel being connected with a first in-board actuator and a first out-board actuator, and a second wing including a second flap panel, the second flap panel being connected with a second in-board actuator and a second out-board actuator. The system can further include an electronic control unit (ECU) configured to control the first and second in-board and out-board actuators to electronically synchronize the positions of the first and second flap panels.

US2013/0192453 describes a motor-driven movement system for moving a movable element, the system comprising at least two actuators, each provided with means connecting it to the movable element and each dimensioned to be capable, on its own, of driving the movable element, a central control unit being connected to the two actuators in order to be capable of sending a position setpoint (Posl, Pos2) to one or other of the actuators. The system further comprises control means for simultaneously controlling both actuators in terms of force in response to the position setpoint sent to one of the actuators.

### SUMMARY OF THE DISCLOSURE

Aspects and features of the present invention are described in the accompanying claims.

A need exists for a system and method that synchronizes flap motion of one or more wings of an aircraft. A need exists for a system and method that prevents, minimizes, or otherwise reduces the potential of a flap to skew or twist during operation. Further, a need exists for a system and method that prevent, minimize, or otherwise reduce asymmetry between wings of an aircraft flap system, as wing asymmetry may cause an aerodynamic rolling moment.

With those needs in mind, the present disclosure provides a system for controlling one or more flaps of an aircraft. The system includes a first flap moveably secured to a first wing of the aircraft. The first flap is moveable between an extended position and a retracted position. A first actuator is coupled to the first flap. A first sensor is coupled to the first actuator. The first sensor is configured to determine a position and speed of the first actuator. The first sensor is further configured to output a first sensor signal that relates to the position and the speed of the first actuator. A second actuator is also coupled to the first flap. A second sensor is coupled to the second actuator. The second sensor is configured to determine a position and speed of the second actuator. The second sensor is further configured to output a second sensor signal that relates to the position and the speed of the second actuator. A control unit is in communication with the first actuator, the first sensor, the second actuator, and the second sensor. The control unit is configured to receive the first and second sensor signals from the first and second sensors, respectively, compare the first and second sensor signals to determine a difference between the first and second sensor signals, and adjust the speed of one or both of the first or second actuators based on the difference between the first and second sensor signals.

The control unit may be configured to adjust the speed of one or both of the first and second actuators by decreasing the speed of a leading one of the first and second actuators that leads a lagging one of the first and second actuators until the lagging one of the first and second actuators catches up to the leading one of the first and second actuators. In at least one other embodiment, the control unit may be configured to adjust the speed of one or both of the first and second actuators by increasing the speed of a lagging one of the first and second actuators that lags behind a leading one of the first and second actuators until the lagging one of the first and second actuators catches up to the leading one of the first and second actuators. In at least one other embodiment, the control unit is configured to adjust the speed of one or both of the first and second actuators by decreasing the speed of a leading one of the first and second actuators that leads a lagging one of the first and second actuators and increasing the speed of the lagging one of the first and second actuators until the lagging one of the first and second actuators catches up to the leading one of the first and second actuators.

The system may also include a second flap moveably secured to a second wing of the aircraft. The second flap is moveable between an extended position and a retracted position. A third actuator is coupled to the second flap. A third sensor is coupled to the third actuator. The third sensor is configured to determine one or both of a position or speed of the third actuator and output a third sensor signal related to one or both of the position or the speed of the third actuator. A fourth actuator is coupled to the second flap. A fourth sensor is coupled to the fourth actuator. The fourth sensor is configured to determine one or both of a position or speed of the fourth actuator and output a fourth sensor signal related to one or both of the position or the speed of the fourth actuator. The control unit is in communication with the third actuator, the third sensor, the fourth actuator, and the fourth sensor. The control unit is further configured to receive the third and fourth sensor signals from the third and fourth sensors, respectively, compare the third and fourth sensor signals to determine a difference between the third and fourth sensor signals, and adjust the speed of one or both of the third or fourth actuators based on the difference between the third and fourth sensor signals.

The control unit may be configured to determine a difference between one or both of speed or position of the first and second flaps, and adjust the speed of one or both of the first and second flaps based on the difference between one or both of the speed or the position of the first and second flaps. The control unit may be configured determine the difference between one or both of the speed or position of the first and second flaps by analyzing the first, second, third, and fourth sensor signals.

The control unit may be configured to adjust the speed of one or both of the first and second flaps by decreasing the speed of a leading one of the first and second flaps that leads a lagging one of the first and second flaps until the lagging one of the first and second flaps catches up to the leading one of the first and second flaps. In at least one other embodiment, the control unit is configured to adjust the speed of one or both of the first and second flaps by increasing the speed of a lagging one of the first and second flaps that lags behind a leading one of the first and second flaps until the lagging one of the first and second flaps catches up to the leading one of the first and second flaps. The control unit may be configured to adjust the speed of one or both of the first and second flaps by decreasing the speed of a leading one of the first and second flaps that leads a lagging one of the first and second flaps and increasing the speed of the lagging one of the first and second flaps until the lagging one of the first and second flaps catches up to the leading one of the first and second flaps.

A method of controlling one or more flaps of an aircraft is provided. The method includes receiving first and second sensor signals from respective first and second sensors coupled to respective first and second actuators that are moveably secured to a first flap of a first wing of the aircraft. The first and second sensor signals relate to the position and the speed of the respective first and second actuators. The method also includes comparing the first and second sensor signals to determine a difference between the first and second sensor signals, and adjusting the speed of one or both of the first or second actuators based on the difference between the first and second sensor signals.

The determining a difference operation may include analyzing a plurality of sensor signals output by sensors of actuators that are coupled to first and second flaps.

The adjusting the speed operation may include decreasing the speed of a leading one of the first and second flaps that leads a lagging one of the first and second flaps until the lagging one of the first and second flaps catches up to the leading one of the first and second flaps. The adjusting the speed operation may include increasing the speed of a lagging one of the first and second flaps that lags behind a leading one of the first and second flaps until the lagging one of the first and second flaps catches up to the leading one of the first and second flaps. The adjusting the speed operation may include decreasing the speed of a leading one of the first and second flaps that leads a lagging one of the first and second flaps, and increasing the speed of the lagging one of the first and second flaps until the lagging one of the first and second flaps catches up to the leading one of the first and second flaps.

### BRIEF DESCRIPTION OF THE DRAWINGS

Figure 1 is a diagrammatic representation of a schematic view of a flap synchronization system, according to an embodiment of the present disclosure.
Figure 2 illustrates a flow chart of a method of synchronizing actuators coupled to a flap of wing of an aircraft, according to an embodiment of the present disclosure.
Figure 3 illustrates a flow chart of a method of synchronizing flaps moveably secured to wings of an aircraft, according to an embodiment of the present disclosure.
Figure 4 is a diagrammatic representation of a top plan view of an aircraft, according to an embodiment of the present disclosure.
Figure 5 is a diagrammatic representation of an actuator, according to an embodiment of the present disclosure.

### DETAILED DESCRIPTION OF THE DISCLOSURE

The foregoing summary, as well as the following detailed description of certain embodiments will be better understood when read in conjunction with the appended drawings. As used herein, an element or step recited in the singular and preceded by the word "a" or "an" should be understood as not necessarily excluding the plural of the elements or steps. Further, references to "one embodiment" are not intended to be interpreted as excluding the existence of additional embodiments that also incorporate the recited features. Moreover, unless explicitly stated to the contrary, embodiments "comprising" or "having" an element or a plurality of elements having a particular condition may include additional elements not having that condition. The present disclosure is applicable to high lift actuation systems that use distributed flap actuation. The present disclosure provides systems and methods that reduce flap skew by sensing a position and speed of the actuators coupled to a flap, and, in response, adjust the speed of one or more of the actuators, so as to synchronize the actuators. The position and speed of actuators associated with one or more other flaps are sensed, and adjusted accordingly, so as to improve aerodynamic characteristics (or, stated differently, reduce negative aerodynamic effects).

The aircraft can be a commercial aircraft, military aircraft, drone, and/or the like. The control unit identifies which of the actuators is a leading actuator and which of the actuators is a lagging actuator, and adjusts the speed of the leading actuator (such as by reducing its speed) so that the difference in position between the leading actuator and lagging actuator is reduced, thereby reducing the amount and/or likelihood of flap skew.

The present disclosure provides a method of controlling first and second actuators that are used to position a flap of a wing of an aircraft, so as to identify one of the first and a second actuators as a leading actuator and one of the first and second actuators as a lagging actuator, adjusting the speed of the leading actuator, thereby allowing the lagging actuator to catch-up to the leading actuator.

An actuator is leading if it is at a relative position and/or speed ahead of and/or greater than (in relation to a desired direction of travel) a relative position or speed of another actuator, which may be coupled to the same or a different flap. Conversely, an actuator is lagging if it is at a relative position and/or speed behind or less than (in relation to a desired direction of travel) a relative position or speed of another actuator, which may be coupled to the same or a different flap.

Similarly, a flap is leading if it is at a relative position and/or speed ahead of and/or greater than (in relation to a desired direction of travel) a relative position or speed of another flap. Conversely, a flap is lagging if it is at a relative position and/or speed behind or less than (in relation to a desired direction of travel) a relative position or speed of another flap.

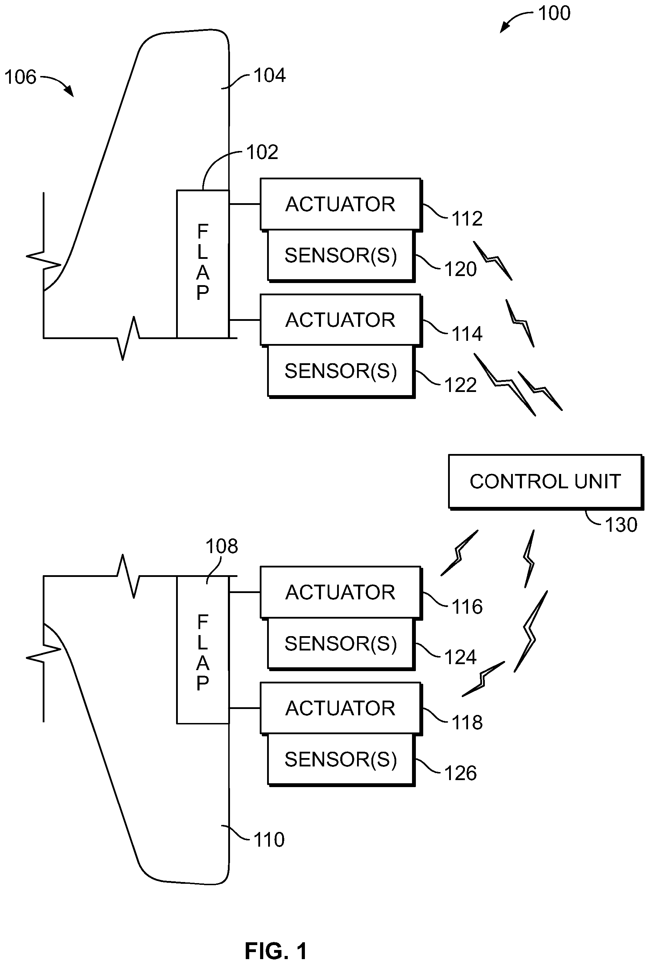

Figure 1 is a diagrammatic representation of a schematic view of a flap synchronization system 100, according to an embodiment of the present disclosure. The flap synchronization system 100 includes a flap 102 on a wing 104 of an aircraft 106 and a flap 108 on an opposite wing 110 of the aircraft 106. The flaps 102 and 108 may be trailing edge flaps on the wings 104 and 110, respectively.

The flap 102 is coupled to actuators 112 and 114, while the flap 108 is coupled to actuators 116 and 118. The actuators 112 and 118 may be outboard actuators, while the actuators 114 and 116 may be inboard actuators. The actuators 112, 114, 116, and 118 may be electromechanical actuators that are configured to actuate the flaps 102 and 108 between retracted and extended positions. The actuators 112, 114, 116, and 118 may be drive stations, such as shown and described in United States Patent No. 9,193,479, entitled "Monitoring of High-Lift Systems for Aircraft". Optionally, the actuators 112, 114, 116, and 118 may be various other types of devices that are used to move the flaps 102 and 108. For example, the actuators 112, 114, 116, and 118 may be or include powered pivotal harnesses, linkages, and/or the like. The actuators 112, 114, 116, and 118 may be secured within the wings 104 and 110. Optionally, the actuators 112, 114, 116, and 118 may be located within a fuselage of the aircraft 106, and coupled to the flaps 102 and 108 through links, coupling, and/or the like.

As shown, the actuators 112 and 114 may be installed on opposite sides or ends of the flap 102, while the actuators 116 and 118 may be installed on opposite sides or ends of the flap 108. Optionally, the actuators 112 and 114 may be installed at other areas of the flap, while the actuators 116 and 118 may be installed at different areas of the flaps 108. There may be no mechanical interaction between the actuators 112 and 114, and no mechanical interaction between the actuators 116 and 118. As such, the aircraft 106 may provide a distributed high-lift system.

While the flap 102 is shown coupled to the two actuators 112 and 114 and the flap 108 is shown coupled to the two actuators 116 and 118, each of the flaps 102 and 108 may be coupled to additional actuators. For example, each of the flaps 102 may be coupled to three or more actuators.

One or more sensors 120 are coupled to the actuator 112, and optionally also to the flap 102. The sensor(s) 120 is (are) configured to sense a rate or speed of the actuator 112, and optionally also of the flap 102. The sensor(s) 120 is (are) also configured to sense a position of the actuator 112, and optionally also of the flap 102. The sensor(s) 120 may be secured within the wing 104. Optionally, the sensor(s) 120 may be located within a fuselage of the aircraft 106, and coupled to the actuator 112 and optionally also to the flap 102, through links, coupling, and/or the like.

One or more sensors 122 are coupled to the actuator 114 and optionally also to the flap 102. The sensor(s) 122 is (are) configured to sense a rate or speed of the actuator 114 and optionally also of the flap 102. The sensor(s) 122 is (are) also configured to sense a position of the actuator 114 and optionally also of the flap 102. The sensor(s) 122 may be secured within the wing 104. Optionally, the sensor(s) 122 may be located within a fuselage of the aircraft 106, and coupled to the actuator 114 and optionally also to the flap 102, through links, coupling, and/or the like.

One or more sensors 124 are coupled to the actuator 116 and optionally also to the flap 108.
The sensor(s) 124 is (are) configured to sense a rate or speed of the actuator 116 and optionally also of the flap 108. The sensor(s) 124 is (are) also configured to sense a position of the actuator 116 and optionally also of the flap 108. The sensor(s) 124 may be secured within the wing 110. Optionally, the sensor(s) 124 may be located within a fuselage of the aircraft 106, and coupled to the actuator 116 and optionally also to the flap 108, through links, coupling, and/or the like.

One or more sensors 126 are coupled to the actuator 118 and optionally also to the flap 108. The sensor(s) 126 is (are) configured to sense a rate or speed of the actuator 118 and optionally also of the flap 108. The sensor(s) 126 is (are) also configured to sense a position of the actuator 118 and optionally also of the flap 108. The sensor(s) 126 may be secured within the wing 110. Optionally, the sensor(s) 126 may be located within a fuselage of the aircraft 106, and coupled to the actuator 118 and optionally also to the flap 108, through links, coupling, and/or the like.

A control unit 130 is operatively coupled to and in communication with the actuators 112, 114, 116, and 118. The control unit 130 may be located within a fuselage of the aircraft 106 (such as within a cockpit), and may be coupled to each actuator 112, 114, 116, and 118 through one or more wired or wireless connections. The control unit 130 is configured to control operation of the actuators 112, 114, and 116, and 118 to control movement of the flaps 102 and 108 based on input from an operator, such as a pilot of the aircraft 106.

The control unit 130 is also coupled to and in communication with the sensors 120, 122, 124 and 126, such as through one or more wired or wireless connections. The control unit 130 receives signals from the sensors 120, 122, 124, and 126 to determine the speed and position of each actuator 112, 114, 116, and 118. Based on the signals received from the sensors 120, 122, 124, and 126, the control unit 130 may adjust the motion of the actuators 112, 114, 116, and 118. For example, the control unit 130 may adjust the speed of the actuators 112 and 114 based on the signals received from the sensors 120 and 122 to ensure that the actuators 112 and 114 are synchronized and moving the flap 102 at the same rate. Similarly, the control unit 130 may adjust the speed of the actuators 116 and 118 based on the signals received from the sensors 124 and 126 to ensure that the actuators 116 and 118 are synchronized and moving the flap 108 at the same rate. Additionally, the control unit 130 may also sense the speed and position of each flap 102 and 108 based on the signals received from the sensors 120, 122, 124, and 126 and adjust the motion of the flaps 102 and 108 to ensure that both the flaps 102 and 108 are synchronized, at a desired position, and moving at a desired rate.

The control unit 130 receives signals from the sensors 120 and 122. The received signals relate to the speed of the actuators 112, 114, and to the position of the actuators 112, 114, optionally also to the speed of the flap 102, and/or the position of the flap 102. For example, the signals output by the sensors 120 and 122 and received by the control unit 130 provide position and speed data of the actuators 112 and 114, respectively.

The control unit 130 compares the signals received from the sensors 120 and 122. The control unit 130 determines whether there is a positional and speed difference between the actuators 112 and 114 based on the signals received from the sensors 120 and 122. If there is no difference, the control unit 130 continues to operate the actuators 112 and 114 without adjustment. If, however, there is a positional and speed difference between the actuators 112 and 114, the control unit 130 adjusts the motion of the actuators 112 and 114. For example, if the control unit 130 determines that the actuator 112 is at an advanced position in relation to the actuator 114, the control unit 130 may reduce the speed of the actuator 112 until the actuator 114 catches up to the position of the actuator 112, at which point the control unit 130 operates the actuators 112 and 114 at the same speed or rate. Similarly, if the control unit 130 determines that the actuator 112 is moving at a faster rate or speed than the actuator 114, the control unit 130 may reduce the speed of the actuator 112 until the actuator 114 catches up to the position and speed of the actuator 112, at which point the control unit 130 operates the actuators 112 and 114 at the same speed.

Accordingly, the control unit 130 monitors the motion of the actuators 112 and 114 to determine if one of the actuators 112 and 114 is lagging behind the other of the actuators 112 and 114. The control unit 130 then adjusts the speed of the leading actuator 112 or 114 so that the lagging actuator 112 or 114 catches up, thereby synchronizing the actuators 112 and 114 and reducing a likelihood of the flap 102 skewing or twisting (or otherwise controlling a magnitude of skewing or twisting within acceptable limits).

Similarly, the control unit 130 compares the signals received from the sensors 124 and 126. The control unit 130 determines whether there is a positional and speed difference between the actuators 116 and 118 based on the signals received from the sensors 124 and 126. If there is no difference, the control unit 130 continues to operate the actuators 116 and 118 without adjustment. If, however, there is a positional and speed difference between the actuators 116 and 118, the control unit 130 adjusts the motion of the actuators 116 and 118. For example, if the control unit 130 determines that the actuator 116 is at an advanced position in relation to the actuator 118, the control unit 130 may reduce the speed of the actuator 116 until the actuator 118 catches up to the position of the actuator 118, at which point the control unit 130 operates the actuators 116 and 118 at the same speed. Similarly, if the control unit 130 determines that the actuator 116 is moving at a faster rate or speed than the actuator 118, the control unit 130 may reduce the speed of the actuator 116 until the actuator 118 catches up to the position and speed of the actuator 116, at which point the control unit 130 operates the actuators 116 and 118 at the same speed.

As such, the control unit 130 monitors the motion of the actuators 116 and 118 to determine if one of the actuators 116 and 118 is lagging behind the other of the actuators 116 and 118. The control unit 130 then adjusts the speed of the leading actuator 116 or 118 so that the lagging actuator 116 or 118 catches up, thereby synchronizing the actuators 116 and 118 and reducing a likelihood of the flap 108 skewing or twisting (or otherwise controlling a magnitude of skewing or twisting within acceptable limits).

Additionally, the control unit 130 monitors motion of the flaps 102 and 108 in relation to one another in order to ensure synchronized motion therebetween. As described above, the control unit 130 synchronizes motion of the actuators 112 and 114 coupled to the flap 102, as well as the motion of the actuators 116 and 118 coupled to the flap 108 in order to reduce the likelihood of the flaps skewing or twisting (or otherwise controlling a magnitude of skewing or twisting within acceptable limits). Through the signals received from the sensors 120, 122, 124, and 126, the control unit 130 determines the position and speed of each flap 102 and 108. The control unit 130 determines whether there is a difference between the position and/or speed of the flaps 102 and 108. If there is no difference between the position and/or speed of the flaps 102 and 108, the control unit 130 refrains from adjusting the motion of the flaps 102 and 108. If, however, the control unit 130 determines that one of the flaps 102 and 108 is lagging behind the other of the flaps 102 or 108 (with respect to position and/or speed), the control unit 130 adjusts the speed of the leading flap 102 or 108 until the lagging flap 102 or 108 catches up to the leading flap 102 or 108. When the lagging flap 102 or 108 catches up to the leading flap 102 or 108, the control unit 130 operates the flaps 102 and 108 (through the respective actuators 112, 114, 116, and 118) at the same rate.

As described above, the control unit 130 is in communication with actuators 112, 114, 116, 118, and the sensors 120, 122, 124, and 126. The control unit receives sensor signals from the sensors 120 and 112, for example. The sensor signals relate to one or both of a position or speed of a respective actuator 112 and 114. The control unit 130 compares the received second sensor signals to determine a difference therebetween. The control unit 130 adjusts the speed of one or both of the actuators 112 and 114 based on the difference between the first and second sensor signals. For example, the control unit 130 may slow the speed of a leading actuator until a lagging actuator catches up to the leading actuator. In at least one other embodiment, the control unit 130 may optionally increase the speed of a lagging actuator until the lagging actuator catches up to the leading actuator. In at least one other embodiment, the control unit 130 may increase the speed of a lagging actuator and decrease the speed of a leading actuator until the lagging actuator catches up to the leading actuator. The control unit 130 may operate the actuators 116 and 118 in a similar fashion.

Further, the control unit 130 may compare the position and speed of the flaps 102 and 108. The control unit 130 may decrease the speed of a leading flap until the lagging flap catches up to a leading flap. In at least one other embodiment, the control unit 130 may increase the speed of a lagging flap until the lagging flap catches up to the leading flap. In at least one other embodiment, the control unit 130 may increase the speed of a lagging flap and decrease the speed of a leading flap until the lagging flap catches up to the leading flap.

As used herein, the term "control unit," "unit," "central processing unit," "CPU," "computer," or the like may include any processor-based or microprocessor-based system including systems using microcontrollers, reduced instruction set computers (RISC), application specific integrated circuits (ASICs), logic circuits, and any other circuit or processor including hardware, software, or a combination thereof capable of executing the functions described herein. Such are exemplary only, and are thus not intended to limit in any way the definition and/or meaning of such terms. For example, the control unit 130 may be or include one or more processors that are configured to control operation of the flaps 102 and 108, as described above.

The control unit 130 is configured to execute a set of instructions that are stored in one or more storage elements (such as one or more memories), in order to process data. For example, the control unit 130 may include or be coupled to one or more memories. The storage elements may also store data or other information as desired or needed. The storage elements may be in the form of an information source or a physical memory element within a processing machine.

The set of instructions may include various commands that instruct the control unit 130 as a processing machine to perform specific operations such as the methods and processes of the various embodiments of the subject matter described herein. The set of instructions may be in the form of a software program. The software may be in various forms such as system software or application software. Further, the software may be in the form of a collection of separate programs, a program subset within a larger program or a portion of a program. The software may also include modular programming in the form of object-oriented programming. The processing of input data by the processing machine may be in response to user commands, or in response to results of previous processing, or in response to a request made by another processing machine.

The diagrams of embodiments herein may illustrate one or more control or processing units, such as the control unit 130. It is to be understood that the processing or control units may represent circuits, circuitry, or portions thereof that may be implemented as hardware with associated instructions (e.g., software stored on a tangible and non-transitory computer readable storage medium, such as a computer hard drive, ROM, RAM, or the like) that perform the operations described herein. The hardware may include state machine circuitry hardwired to perform the functions described herein. Optionally, the hardware may include electronic circuits that include and/or are connected to one or more logic-based devices, such as microprocessors, processors, controllers, or the like. Optionally, the control unit 130 may represent processing circuitry such as one or more of a field programmable gate array (FPGA), application specific integrated circuit (ASIC), microprocessor(s), and/or the like. The circuits in various embodiments may be configured to execute one or more algorithms to perform functions described herein. The one or more algorithms may include aspects of embodiments disclosed herein, whether or not expressly identified in a flowchart or a method.

As used herein, the terms "software" and "firmware" are interchangeable, and include any computer program stored in memory for execution by a computer, including RAM memory, ROM memory, EPROM memory, EEPROM memory, and non-volatile RAM (NVRAM) memory. The above memory types are exemplary only, and are thus not limiting as to the types of memory usable for storage of a computer program.

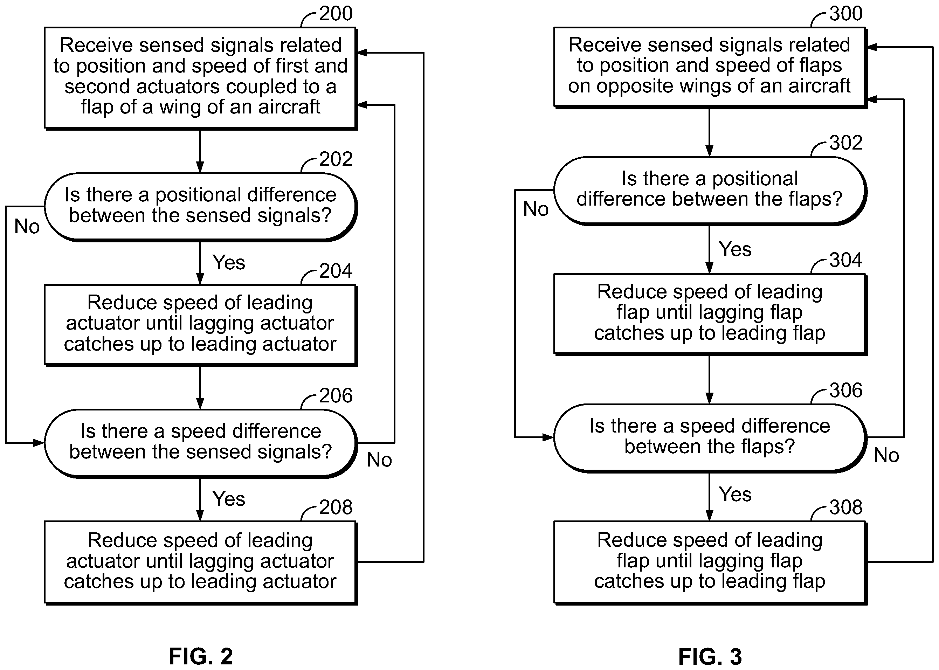

Figure 2 illustrates a flow chart of a method of synchronizing actuators coupled to a flap of wing of an aircraft, according to an embodiment of the present disclosure. The control unit 130 (shown in Figure 1) may operate according to the flow chart shown and described with respect to Figure 2.

Initially, a command is input from a pilot flap handle, or other such input device. Then, at 200, sensed signals (such as output by one or more sensors coupled to actuators and/or a flap) related to position and speed of first and second actuators coupled to a flap of a wing are received, such as by the control unit 130. At 202, it is determined (such as by the control unit 130) if there is a positional difference between the sensed signals. If there is a positional difference, the speed of a leading actuator is reduced until a lagging actuator catches up to the leading actuator at 204. Optionally, the speed of the lagging actuator may be increased until the lagging actuator catches up to the leading actuator. In at least one other embodiment, the speed of the leading actuator may be reduced, and the speed of the lagging actuator may be increased until the lagging actuator catches up to the leading actuator. The method then proceed from 204 to 206, in which it is determined if there is a speed difference between the sensed signals. If there is a speed difference between the sensed signals, the method proceeds from 206 to 208, in which the speed of the leading actuator is reduced until the lagging actuator catches up to the leading actuator. Optionally, the speed of the lagging actuator may be increased until the lagging actuator catches up to the leading actuator. In at least one other embodiment, the speed of the leading actuator may be reduced, and the speed of the lagging actuator may be increased until the lagging actuator catches up to the leading actuator. The method then returns to 200.

If, at 202, there is not a positional difference between the sensed signals, the method proceeds from 202 to 206. If, at 206, there is not a speed difference between the sensed signals, the method returns to 200.

Figure 3 illustrates a flow chart of a method of synchronizing flaps moveably secured to wings of an aircraft, according to an embodiment of the present disclosure. The control unit 130 (shown in Figure 1) may operate according to the flow chart shown and described with respect to Figure 3.

Initially, a command is input from a pilot flap handle, or other such input device. Then, at 300, sensed signals related to position and speed of flaps on opposite wings of an aircraft are received, such as by the control unit 130. The control unit 130 may compare the flaps to one another, after the control unit 130 has synchronized the actuators coupled to each flap to reduce the likelihood of flap skew or twist (or otherwise controlling a magnitude of skewing or twisting within acceptable limits). For example, the method shown and described in Figure 3 may occur subsequent to, or simultaneously with, the method shown and descried in Figure 2. The sensed signals may be output by the sensors coupled to the actuators and/or flaps.

At 302, it is determined (such as by the control unit 130) if there is a positional difference between the flaps. The positions of the flaps may be compared relative to one another (through an analysis of the sensed signals) to determine if there is a difference between angular, linear, and/or rotational positions of the flaps. If there is a positional difference between the flaps, the method proceeds from 302 to 304, in which the speed of a leading flap is reduced until a lagging flap catches up to the leading flap. Optionally, the speed of the lagging flap may be increased until the lagging flap catches up to the leading flap. In at least one other embodiment, the speed of the leading flap may be reduced, and the speed of the lagging flap may be increased until the lagging flap catches up to the leading flap. The method then proceeds from 304 to 306, in which it is determined if there is a speed difference between the flaps. If there is a speed difference between the flaps, the method proceeds from 306 to 308, in which the speed of the leading flap is reduced until the lagging flap catches up to the leading flap. Optionally, the speed of the lagging flap may be increased until the lagging flap catches up to the leading flap. In at least one other embodiment, the speed of the leading flap may be reduced, and the speed of the lagging flap may be increased until the lagging flap catches up to the leading flap. The method then returns to 300.

If, at 302, there is not a positional difference between the flaps, the method proceeds from 302 to 306. If, at 306, there is not a speed difference between the flaps, the method returns to 300.

Referring to Figures 1-3, the control unit 130 may compare and adjust positions and speeds of actuators and/or flaps. The comparison and adjustment may occur after high lift systems have been monitored for errors, such as described in United States Patent No. 9,193,479, entitled "Monitoring of High-Lift Systems for Aircraft." The control unit 130 and/or another controller or control unit may monitor the high lift systems for errors.

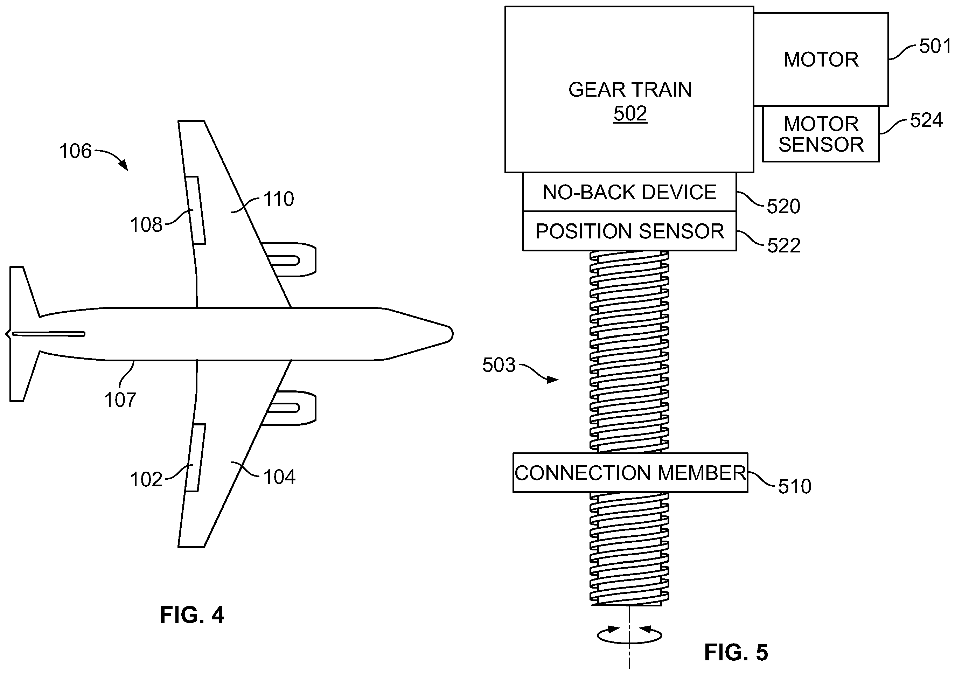

Figure 4 is a diagrammatic representation of a top plan view of the aircraft 106, according to an embodiment of the present disclosure. The aircraft 106 includes a fuselage 107 and the wings 104 and 110 extending from respective right and left sides of the fuselage 107. The wings 104 and 110 include the extendable flaps 102 and 108 that are configured to increase drag or lift when extended from a trailing edge of the wings 104 and 110. The flaps 102 and 108 are part of a high-lift system implemented in the aircraft 106. Although one flap is illustrated on each wing 104 and 110, it is to be understood that multiple flaps may be installed on each of the wings 104 and 110.

Referring to Figures 1 and 4, the control unit 130 extends or retracts the flaps 102 and 108 in response to inputs from a pilot, a flight control system, and/or the like. The control unit 130 may provide electrical power to each of the actuators 112, 114, 116, and 118 (electrical power may also or alternatively be supplied by the aircraft electrical power system). The actuators 112, 114, 116, and 118 may be electrically controlled, and may therefore be referred to as Electrical-Mechanical Actuators (EMAs). The control unit 130 monitors operation of the actuators 112, 114, 116, and 118 through the sensors 120, 122, 124, and 126, which may be integrated with the actuators 112, 114, 116, and 118, respectively.

Figure 5 is a diagrammatic representation of an actuator 500, according to an embodiment of the present disclosure. One or more of the actuators 112, 114, 116, and 118 (shown in Figure 1) may be configured as the actuator 500, which may be a drive station.

The actuator 500 may include an electric motor 501, a gear train 502, and a drive screw 503. The motor 501 is able to turn clockwise or counterclockwise in response to the signals from the control unit 130 (shown in Figure 1). The rotational motion of the motor 501 turns a series of gears within the gear train 502, which may be used to slow down the rotational motion of the motor 501. The gear train 502 in turn imparts rotational motion on the drive screw 503. The drive screw 503 includes a connection member 510, such as a ball nut and gimbal, that moves upward or downward along the drive screw 503 as the drive screw 503 turns. Therefore, the drive screw 503 converts the rotational motion of the motor 501 and the gear train 502 into a linear motion of the connection member 510. Although not shown in Figure 5, the connection member 510 is configured to attach to one end of an arm (not shown), while the other end of the arm connects to a side of a flap. Thus, when the connection member 510 moves up and down on the drive screw 503, the motion imparts movement on the arm to extend or retract the flap.

The actuator 500 may also include a no-back device 520. The no-back device 520 acts as a brake to ensure irreversibility of the flap if the actuator 500 becomes disconnected from the flap. For example, if the motor 501 is inoperable, then the no-back device 520 engages to stop the flap from moving.

The actuator 500 may also include an integrated position sensor 522. The position sensor 522 may be positioned between the no-back device 520 and the flap, and monitors an output position of the actuator 500 (for example, the rotation angle of the drive screw 503). The position sensor 522 may alternatively be installed at the connection member 510, and/or directly attached to the flap.

The actuator 500 may also include a motor sensor 524. The motor sensor 524 may be configured to monitor a current draw or load on the motor 501. The motor sensor 524 may also monitor a position and/or speed of the motor 501. The position of the motor 501 may be indicated by a number of turns in either a forward or a reverse direction with a hall effect or a rotary type sensor, for example.

Embodiments of the present disclosure provide systems and methods that synchronize flap motion of one or more wings of an aircraft. Embodiments of the present disclosure provide systems and methods that prevent, minimize, or other reduce the potential of a flap to skew or twist during operation. Embodiments of the present disclosure provide systems and methods that prevent, minimize, or otherwise reduce asymmetry between wings of an aircraft flap system. Embodiments of the present disclosure may be used to control leading edge flaps and/or trailing edge flaps.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described embodiments (and/or aspects thereof) may be used in combination with each other. In addition, many modifications may be made to adapt a particular situation or material to the teachings of the various embodiments of the disclosure without departing from their scope. While the dimensions and types of materials described herein are intended to define the parameters of the various embodiments of the disclosure, the embodiments are by no means limiting and are exemplary embodiments. Many other embodiments will be apparent to those of skill in the art upon reviewing the above description. The scope of the various embodiments of the disclosure should, therefore, be determined with reference to the appended claims. In the appended claims, the terms "including" and "in which" are used as the plain-English equivalents of the respective terms "comprising" and "wherein." Moreover, the terms "first," "second," and "third," etc. are used merely as labels, and are not intended to impose numerical requirements on their objects.

This written description uses examples to disclose the various embodiments of the disclosure, including the best mode, and also to enable any person skilled in the art to practice the various embodiments of the disclosure, including making and using any devices or systems and performing any incorporated methods. The patentable scope of the various embodiments of the disclosure is defined by the claims, and may include other examples that occur to those skilled in the art and that are within the scope of the claims.

## Claims

1. A system for controlling one or more flaps of an aircraft (106), the system comprising:
a first flap (102) moveably securable to a first wing (104) of the aircraft (106), the first flap (102) being moveable between an extended position and a retracted position;
a first actuator (112) coupled to the first flap (102);
a first sensor (120) coupled to the first actuator (112), wherein the first sensor (120) is configured to determine a position and speed of the first actuator (112) and output a first sensor signal that relates to the position and the speed of the first actuator (112);
a second actuator (114) coupled to the first flap (102);
a second sensor (122) coupled to the second actuator (114), wherein the second sensor (122) is configured to determine a position and speed of the second actuator (114) and output a second sensor signal that relates to the position and the speed of the second actuator (114); and
a control unit (130) in communication with the first actuator (112), the first sensor (120), the second actuator (114), and the second sensor (122), wherein the control unit (130) is configured to:
receive the first and second sensor signals from the first and second sensors (120, 122), respectively;
compare the first and second sensor signals to determine a difference between the first and second sensor signals; and
adjust the speed of one or both of the first or second actuators (112, 114) based on the difference between the first and second sensor signals.

2. The system of claim 1, wherein the control unit (130) is configured to adjust the speed of one or both of the first and second actuators (112, 114) by decreasing the speed of a leading one of the first and second actuators (112, 114) that leads a lagging one of the first and second actuators (112, 114) until the lagging one of the first and second actuators (112, 114) catches up to the leading one of the first and second actuators (112, 114).

3. The system of claim 1, wherein the control unit (130) is configured to adjust the speed of one or both of the first and second actuators (112, 114) by increasing the speed of a lagging one of the first and second actuators (112, 114) that lags behind a leading one of the first and second actuators (112, 114) until the lagging one of the first and second actuators (112, 114) catches up to the leading one of the first and second actuators (112, 114).

4. The system of claim 1, wherein the control unit (130) is configured to adjust the speed of one or both of the first and second actuators (112, 114) by decreasing the speed of a leading one of the first and second actuators (112, 114) that leads a lagging one of the first and second actuators (112, 114) and increasing the speed of the lagging one of the first and second actuators (112, 114) until the lagging one of the first and second actuators (112, 114) catches up to the leading one of the first and second actuators (112, 114).

5. The system of claim 1, further comprising:
a second flap (108) moveably securable to a second wing (110) of the aircraft (106), the second flap (108) being moveable between an extended position and a retracted position;
a third actuator (116) coupled to the second flap (108);
a third sensor (124) coupled to the third actuator (116), wherein the third sensor (124) is configured to determine a measurement of the third actuator (116) and output a third sensor signal related to the measurement of the third actuator (116);
a fourth actuator (118) coupled to the second flap (108): a fourth sensor (126) coupled to the fourth actuator (118), wherein the fourth sensor (126) is configured to determine a measurement of the fourth actuator (118) and output a fourth sensor signal related to the measurement of the fourth actuator (118),
wherein the measurement of the third actuator and the measurement of the forth actuator both comprise one of: a position of the respective actuator, a speed of the respective actuator, and a position and speed of the respective actuator;
wherein the control unit (130) is in communication with the third actuator (116), the third sensor (124), the fourth actuator (118), and the fourth sensor (126), wherein the control unit (130) is further configured to:
receive the third and fourth sensor signals from the third and fourth sensors (124, 126), respectively;
compare the third and fourth sensor signals to determine a difference between the third and fourth sensor signals; and
adjust the speed of one or both of the third or fourth actuators (116, 118) based on the difference between the third and fourth sensor signals.

6. The system of claim 5, wherein the control unit (130) is configured to:
determine a difference between one or both of speed or position of the first and second flaps (102, 108); and
adjust the speed of one or both of the first and second flaps (102, 108) based on the difference between one or both of the speed or the position of the first and second flaps (102, 108).

7. The system of claim 6, wherein the control unit (130) is configured determine the difference between one or both of the speed or position of the first and second flaps (102, 108) by analyzing the first, second, third, and fourth sensor signals.

8. The system of claim 6, wherein the control unit (130) is configured to adjust the speed of one or both of the first and second flaps (102, 108) by decreasing the speed of a leading one of the first and second flaps (102, 108) that leads a lagging one of the first and second flaps (102, 108) until the lagging one of the first and second flaps (102, 108) catches up to the leading one of the first and second flaps (102, 108).

9. The system of claim 6, wherein the control unit (130) is configured to adjust the speed of one or both of the first and second flaps (102, 108) by increasing the speed of a lagging one of the first and second flaps (102, 108) that lags behind a leading one of the first and second flaps (102, 108) until the lagging one of the first and second flaps (102, 108) catches up to the leading one of the first and second flaps (102, 108).

10. The system of claim 6, wherein the control unit (130) is configured to adjust the speed of one or both of the first and second flaps (102, 108) by decreasing the speed of a leading one of the first and second flaps (102, 108) that leads a lagging one of the first and second flaps (102, 108) and increasing the speed of the lagging one of the first and second flaps (102, 108) until the lagging one of the first and second flaps (102, 108) catches up to the leading one of the first and second flaps (102, 108).

11. A method of controlling one or more flaps of an aircraft, the method comprising:
receiving first and second sensor signals from respective first and second sensors (120, 122) coupled to respective first and second actuators (112, 114) that are moveably secured to a first flap (102) of a first wing (104) of the aircraft (106), wherein the first and second sensor signals relate to the position and the speed of the respective first and second actuators (112, 114);
comparing the first and second sensor signals to determine a difference between the first and second sensor signals; and
adjusting the speed of one or both of the first or second actuators (112, 114) based on the difference between the first and second sensor signals.

12. The method of claim 11, wherein the adjusting operation comprises decreasing the speed of a leading one of the first and second actuators (112, 114) that leads a lagging one of the first and second actuators (112, 114) until the lagging one of the first and second actuators (112, 114) catches up to the leading one of the first and second actuators (112, 114).

13. The method of claim 11, further comprising:
receiving third and fourth sensor signals from respective third and fourth sensors (124, 126) coupled to respective third and fourth actuators (116, 118) that are moveably secured to a second flap (108) of a second wing (110) of the aircraft (106), wherein the third and fourth sensor signals both relate to one of: a position of the respective actuator, a speed of the respective actuator, and a position and speed of the respective actuator (116, 118);
comparing the third and fourth sensor signals to determine a difference between the third and fourth sensor signals; and
adjusting the speed of one or both of the third or fourth actuators (116, 118) based on the difference between the third and fourth sensor signals.

14. The method of claim 13, further comprising:
determining a difference between one or both of speed or position of the first and second flaps (102, 108); and
adjusting the speed of one or both of the first and second flaps (102, 108) based on the difference between one or both of the speed or the position of the first and second flaps (102, 108).

15. The method of claim 14, wherein the determining the difference between one or both of speed or position of the first and second flaps (102, 108) operation comprises analyzing the first, second, third, and fourth sensor signals.

## Patentansprüche

1. System zur Steuerung einer oder mehrerer Klappen eines Flugzeugs (106), wobei das System Folgendes aufweist:
eine erste Klappe (102), welche bewegbar an einem ersten Flügel (104) des Flugzeugs (106) befestigbar ist, wobei die erste Klappe (102) zwischen einer ausgefahrenen Position und einer eingefahrenen Position bewegbar ist;
einen ersten Aktuator (112), welcher mit der ersten Klappe (102) gekoppelt ist;
einen ersten Sensor (120), welcher mit dem ersten Aktuator (112) gekoppelt ist, wobei der erste Sensor (120) konfiguriert ist, um eine Position und Geschwindigkeit des ersten Aktuators (112) zu bestimmen und um ein erstes Sensorsignal, welches die Position und die Geschwindigkeit des ersten Aktuators (112) betrifft, auszugeben;
einen zweiten Aktuator (114), welcher mit der ersten Klappe (102) gekoppelt ist;
einen zweiten Sensor (122), welcher mit dem zweiten Aktuator (114) gekoppelt ist, wobei der zweite Sensor (122) konfiguriert ist, um eine Position und Geschwindigkeit des zweiten Aktuators (114) zu bestimmen und um ein zweites Sensorsignal, welches die Position und die Geschwindigkeit des zweiten Aktuators (114) betrifft, auszugeben; und
eine Steuereinheit (130), welche mit dem ersten Aktuator (112), dem ersten Sensor (120), dem zweiten Aktuator (114) und dem zweiten Sensor (122) in Kommunikationsverbindung ist, wobei die Steuereinheit (130) zu Folgendem konfiguriert ist:
Empfangen des ersten und zweiten Sensorsignals von dem ersten bzw. zweiten Sensor (120, 122);
Vergleichen des ersten und zweiten Sensorsignals zum Bestimmen einer Differenz zwischen dem ersten und zweiten Sensorsignal; und
Einstellen der Geschwindigkeit von einem oder beiden des ersten oder zweiten Aktuators (112, 114) basierend auf der Differenz zwischen dem ersten und zweiten Sensorsignal.

2. System nach Anspruch 1, wobei die Steuereinheit (130) konfiguriert ist, um die Geschwindigkeit von einem oder beiden des ersten und zweiten Aktuators (112, 114) durch das Verringern der Geschwindigkeit eines vorausgehenden des ersten und zweiten Aktuators (112, 114), welcher einem zurückbleibenden des ersten und zweiten Aktuators (112, 114) vorausgeht, einzustellen, bis der zurückbleibende des ersten und zweiten Aktuators (112, 114) den vorausgehenden des ersten und zweiten Aktuators (112, 114) einholt.

3. System nach Anspruch 1, wobei die Steuereinheit (130) konfiguriert ist, um die Geschwindigkeit von einem oder beiden des ersten und zweiten Aktuators (112, 114) durch das Erhöhen der Geschwindigkeit eines zurückbleibenden des ersten und zweiten Aktuators (112, 114), welcher hinter einem vorausgehenden des ersten und zweiten Aktuators (112, 114) zurückbleibt, einzustellen, bis der zurückbleibende des ersten und zweiten Aktuators (112, 114) den vorausgehenden des ersten und zweiten Aktuators (112, 114) einholt.

4. System nach Anspruch 1, wobei die Steuereinheit (130) konfiguriert ist, um die Geschwindigkeit von einem oder beiden des ersten und zweiten Aktuators (112, 114) durch das Verringern der Geschwindigkeit eines vorausgehenden des ersten und zweiten Aktuators (112, 114), welcher einem zurückbleibenden des ersten und zweiten Aktuators (112, 114) vorausgeht, und durch das Erhöhen der Geschwindigkeit des zurückbleibenden des ersten und zweiten Aktuators (112, 114) einzustellen, bis der zurückbleibende des ersten und zweiten Aktuators (112, 114) den vorausgehenden des ersten und zweiten Aktuators (112, 114) einholt.

5. System nach Anspruch 1, welches ferner Folgendes aufweist:
eine zweite Klappe (108), welche bewegbar an einem zweiten Flügel (110) des Flugzeugs (106) befestigbar ist, wobei die zweite Klappe (108) zwischen einer ausgefahrenen Position und einer eingefahrenen Position bewegbar ist;
einen dritten Aktuator (116), welcher mit der zweiten Klappe (108) gekoppelt ist;
einen dritten Sensor (124), welcher mit dem dritten Aktuator (116) gekoppelt ist, wobei der dritte Sensor (124) konfiguriert ist, um eine Messung des dritten Aktuators (116) zu bestimmen und um ein drittes Sensorsignal, welches die Messung des dritten Aktuators (116) betrifft, auszugeben;
einen vierten Aktuator (118), welcher mit der zweiten Klappe (108) gekoppelt ist, einen vierten Sensor (126) welcher mit dem vierten Aktuator (118) gekoppelt ist, wobei der vierte Sensor (126) konfiguriert ist, um eine Messung des vierten Aktuators (118) zu bestimmen und um ein viertes Sensorsignal, welches die Messung des vierten Aktuators (118) betrifft, auszugeben,
wobei sowohl die Messung des dritten Aktuators als auch die Messung des vierten Aktuators eines von den Folgenden aufweisen: eine Position des entsprechenden Aktuators, eine Geschwindigkeit des entsprechenden Aktuators und eine Position und Geschwindigkeit des entsprechenden Aktuators;
wobei die Steuereinheit (130) mit dem dritten Aktuator (116), dem dritten Sensor (124), dem vierten Aktuator (118) und dem vierten Sensor (126) in Kommunikationsverbindung ist, wobei die Steuereinheit (130) ferner zu Folgendem konfiguriert ist:
Empfangen des dritten und vierten Sensorsignals von dem dritten bzw. vierten Sensor (124, 126);
Vergleichen des dritten und vierten Sensorsignals zum Bestimmen einer Differenz zwischen dem dritten und vierten Sensorsignal; und
Einstellen der Geschwindigkeit von einem oder beiden des dritten oder vierten Aktuators (116, 118) basierend auf der Differenz zwischen dem dritten und vierten Sensorsignal.

6. System nach Anspruch 5, wobei die Steuereinheit (130) zu Folgendem konfiguriert ist:
Bestimmen einer Differenz zwischen einer oder beiden von der Geschwindigkeit oder Position der ersten und zweiten Klappe (102, 108); und
Einstellen der Geschwindigkeit von einer oder beiden der ersten und zweiten Klappe (102, 108) basierend auf der Differenz zwischen einer oder beiden von der Geschwindigkeit oder Position der ersten und zweiten Klappe (102, 108).

7. System nach Anspruch 6, wobei die Steuereinheit (130) zum Bestimmen der Differenz zwischen einer oder beiden von der Geschwindigkeit oder Position der ersten und zweiten Klappe (102, 108) durch Analysieren des ersten, zweiten, dritten und vierten Sensorsignals konfiguriert ist.

8. System nach Anspruch 6, wobei die Steuereinheit (130) konfiguriert ist, um die Geschwindigkeit von einer oder beiden der ersten und zweiten Klappe (102, 108) durch das Verringern der Geschwindigkeit einer vorausgehenden der ersten und zweiten Klappe (102, 108), welche einer zurückbleibenden der ersten und zweiten Klappe (102, 108) vorausgeht, einzustellen, bis die zurückbleibende der ersten und zweiten Klappe (102, 108) die vorausgehende der ersten und zweiten Klappe (102, 108) einholt.

9. System nach Anspruch 6, wobei die Steuereinheit (130) konfiguriert ist, um die Geschwindigkeit von einer oder beiden der ersten und zweiten Klappe (102, 108) durch das Erhöhen der Geschwindigkeit einer zurückbleibenden der ersten und zweiten Klappe (102, 108), welche hinter einer vorausgehenden der ersten und zweiten Klappe (102, 108) zurückbleibt, einzustellen, bis die zurückbleibende der ersten und zweiten Klappe (102, 108) die vorausgehende der ersten und zweiten Klappe (102, 108) einholt.

10. System nach Anspruch 6, wobei die Steuereinheit (130) konfiguriert ist, um die Geschwindigkeit von einer oder beiden der ersten und zweiten Klappe (102, 108) durch das Verringern der Geschwindigkeit einer vorausgehenden der ersten und zweiten Klappe (102, 108), welche einer zurückbleibenden der ersten und zweiten Klappe (102, 108) vorausgeht, und durch das Erhöhen der Geschwindigkeit der zurückbleibenden der ersten und zweiten Klappe (102, 108) einzustellen, bis die zurückbleibende der ersten und zweiten Klappe (102, 108) die vorausgehende der ersten und zweiten Klappe (102, 108) einholt.

11. Verfahren zur Steuerung einer oder mehrerer Klappen eines Flugzeugs, wobei das Verfahren Folgendes aufweist:
Empfangen eines ersten und eines zweiten Sensorsignals von dem entsprechenden ersten und zweiten Sensor (120, 122), welcher mit dem entsprechenden ersten und zweiten Aktuator (112, 114) gekoppelt ist, welcher bewegbar an einer ersten Klappe (102) eines ersten Flügels (104) des Flugzeugs (106) befestigt ist, wobei das erste und zweite Sensorsignal die Position und die Geschwindigkeit des entsprechenden ersten und zweiten Aktuators (112, 114) betreffen;
Vergleichen des ersten und zweiten Sensorsignals zum Bestimmen einer Differenz zwischen dem ersten und zweiten Sensorsignal; und
Einstellen der Geschwindigkeit von einem oder beiden des ersten oder zweiten Aktuators (112, 114) basierend auf der Differenz zwischen dem ersten und zweiten Sensorsignal.

12. Verfahren nach Anspruch 11, wobei der Einstellvorgang das Verringern der Geschwindigkeit eines vorausgehenden des ersten und zweiten Aktuators (112, 114), welcher einem zurückbleibenden des ersten und zweiten Aktuators (112, 114) vorausgeht, bis der zurückbleibende des ersten und zweiten Aktuators (112, 114) den vorausgehenden des ersten und zweiten Aktuators (112, 114) einholt, aufweist.

13. Verfahren nach Anspruch 11, welches ferner Folgendes aufweist:
Empfangen eines dritten und vierten Sensorsignals von dem entsprechenden dritten und vierten Sensor (124, 126), welcher mit dem entsprechenden dritten und vierten Aktuator (116, 118) gekoppelt ist, welcher bewegbar an einer zweiten Klappe (108) eines zweiten Flügels (110) des Flugzeugs (106) befestigt ist, wobei sowohl das dritte als auch das vierte Sensorsignal eines von den Folgenden betreffen: eine Position des entsprechenden Aktuators, eine Geschwindigkeit des entsprechenden Aktuators und eine Position und Geschwindigkeit des entsprechenden Aktuators (116, 118);
Vergleichen des dritten und vierten Sensorsignals zum Bestimmen einer Differenz zwischen dem dritten und vierten Sensorsignal; und
Einstellen der Geschwindigkeit von einem oder beiden des dritten oder vierten Aktuators (116, 118) basierend auf der Differenz zwischen dem dritten und vierten Sensorsignal.

14. Verfahren nach Anspruch 13, welches ferner Folgendes aufweist:
Bestimmen einer Differenz zwischen einer oder beiden von der Geschwindigkeit oder Position der ersten und zweiten Klappe (102, 108); und
Einstellen der Geschwindigkeit von einer oder beiden der ersten und zweiten Klappe (102, 108) basierend auf der Differenz zwischen einer oder beiden von der Geschwindigkeit oder Position der ersten und zweiten Klappe (102, 108).

15. Verfahren nach Anspruch 14, wobei das Bestimmen der Differenz zwischen einer oder beiden von der Geschwindigkeit oder Position der ersten und zweiten Klappe (102, 108) das Analysieren des ersten, zweiten, dritten und vierten Sensorsignals aufweist.

## Revendications

1. Système de commande d'un ou plusieurs volets d'un avion (106), le système comprenant :
un premier volet (102) pouvant être fixé de façon mobile sur une première aile (104) de l'avion (106), le premier volet (102) étant mobile entre une position étendue et une position rétractée ;
un premier actionneur (112) couplé au premier volet (102) ;
un premier capteur (120) couplé au premier actionneur (112), le premier capteur (120) étant conçu pour déterminer une position et une vitesse du premier actionneur (112) et produire un premier signal de capteur qui se rapporte à la position et à la vitesse du premier actionneur (112) ;
un deuxième actionneur (114) couplé au premier volet (102) ;
un deuxième capteur (122) couplé au deuxième actionneur (114), le deuxième capteur (122) étant conçu pour déterminer une position et une vitesse du deuxième actionneur (114) ; et
une unité de commande (130) en communication avec le premier actionneur (112), le premier capteur (120), le deuxième actionneur (114) et le deuxième capteur (122), l'unité de commande (130) étant conçue pour :
recevoir les premier et deuxième signaux des premiers et deuxième capteurs (120, 122), respectivement ;
comparer les premier et deuxième signaux pour déterminer une différence entre les premier et deuxième signaux ; et
ajuster la vitesse d'un ou des deux parmi les premier et deuxième actionneurs (112, 114) en fonction de la différence entre le premier et le deuxième signal de capteur.

2. Système selon la revendication 1, dans lequel l'unité de commande (130) est conçue pour ajuster la vitesse d'un ou des deux parmi le premier et le deuxième actionneur (112, 114) en diminuant la vitesse d'un actionneur avancé parmi le premier et le deuxième actionneur (112, 114) qui prend de l'avance sur un actionneur retardé parmi le premier et le deuxième actionneur (112, 114) jusqu'à ce que l'actionneur retardé parmi le premier et le deuxième actionneur (112, 114) rattrape l'actionneur avancé parmi le premier et le deuxième actionneur (112, 114).

3. Système selon la revendication 1, dans lequel l'unité de commande (130) est conçue pour ajuster la vitesse d'un ou des deux parmi le premier et le deuxième actionneur (112, 114) en augmentant la vitesse d'un actionneur retardé parmi le premier et le deuxième actionneur (112, 114) qui prend du retard sur un actionneur avancé parmi le premier et le deuxième actionneur (112, 114) jusqu'à ce que l'actionneur retardé parmi le premier et le deuxième actionneur (112, 114) rattrape l'actionneur avancé parmi le premier et le deuxième actionneur (112, 114).

4. Système selon la revendication 1, dans lequel l'unité de commande (130) est conçue pour ajuster la vitesse d'un ou des deux parmi le premier et le deuxième actionneur (112, 114) en diminuant la vitesse d'un actionneur avancé parmi le premier et le deuxième actionneur (112, 114) qui prend de l'avance sur un actionneur retardé parmi le premier et le deuxième actionneur (112, 114) et en augmentant la vitesse de l'actionneur retardé parmi le premier et le deuxième actionneur (112, 114) jusqu'à ce que l'actionneur retardé parmi le premier et le deuxième actionneur (112, 114) rattrape l'actionneur avancé parmi le premier et le deuxième actionneur (112, 114).

5. Système selon la revendication 1, comprenant en outre :
un second volet (108) pouvant être fixé de façon mobile sur une seconde aile (104) de l'avion (106), le second volet (102) étant mobile entre une position étendue et une position rétractée ; une troisième actionneur (116) au premier volet (102) ;
un troisième capteur (124) couplé au troisième actionneur (116), le troisième capteur (124) étant conçu pour déterminer une mesure du troisième actionneur (116) et produire un troisième signal de capteur qui se rapporte à la mesure du troisième actionneur (116) ;
un quatrième actionneur (118) couplé au second volet (108) ;
un quatrième capteur (126) couplé au quatrième actionneur (118), le quatrième capteur (126) étant conçu pour déterminer une mesure du quatrième actionneur (118) et produire un quatrième signal de capteur en rapport avec la mesure du quatrième actionneur (118),
la mesure du troisième actionneur et la mesure du quatrième actionneur comprennent une parmi : une position de l'actionneur respectif, une vitesse de l'actionneur respectif et une position et une vitesse de l'actionneur respectif ;
l'unité de commande (130) étant en communication avec le troisième actionneur (116), le troisième capteur (124), le quatrième actionneur (118) et le quatrième capteur (126), l'unité de commande (130) étant, en outre, conçue pour :
recevoir les troisième et quatrième signaux de capteur depuis les troisième et quatrième capteurs (124, 126), respectivement ;
comparer les troisième et quatrième signaux de capteur pour déterminer une différence entre les troisième et quatrième signaux de capteur ; et
ajuster la vitesse d'un ou des deux parmi les troisième et quatrième actionneurs (116, 118) en fonction de la différence entre les troisième et quatrième signaux de capteur.

6. Système selon la revendication 5, dans lequel l'unité de commande (130) est conçue pour :
déterminer une différence entre un ou les deux parmi la vitesse ou la position des premiers et seconds volets (102, 108) ; et
ajuster la vitesse d'un ou des deux parmi les premiers et seconds volets (102, 108) en fonction de la différence entre un ou les deux parmi la vitesse ou la position du premier et du second volet (102, 108).

7. Système selon la revendication 6, dans lequel l'unité de commande (130) est conçue pour déterminer la différence entre un ou les deux parmi la vitesse ou la position des premiers et seconds volets (102, 108) en analysant les premier, deuxième, troisième et quatrième signaux de capteur.

8. Système selon la revendication 6, dans lequel l'unité de commande (130) est conçue pour ajuster la vitesse d'un ou des deux parmi les premiers et seconds volets (102, 108) en diminuant la vitesse d'un volet avancé parmi le premier et le second volet (102, 108) qui prend de l'avance sur un volet retardé parmi le premier et le deuxième volet (102, 108) jusqu'à ce que le volet retardé parmi le premier et le deuxième volet (102, 108) rattrape le volet avancé parmi le premier et le deuxième volet (102, 108).

9. Système selon la revendication 6, dans lequel l'unité de commande (130) est conçue pour ajuster la vitesse d'un ou des deux parmi les premiers et seconds volets (102, 108) en augmentant la vitesse d'un volet retardé parmi le premier et le second volet (102, 108) qui prend du retard sur un volet avancé parmi le premier et le deuxième volet (102, 108) jusqu'à ce que le volet retardé parmi le premier et le deuxième volet (102, 108) rattrape le volet avancé parmi le premier et le deuxième volet (102, 108).

10. Système selon la revendication 6, dans lequel l'unité de commande (130) est conçue pour ajuster la vitesse d'un ou des deux parmi les premiers et seconds volets (102, 108) en diminuant la vitesse d'un volet avancé parmi le premier et le second volet (102, 108) qui prend de l'avance sur un volet retardé parmi le premier et le deuxième volet (102, 108) et en augmentant la vitesse d'un volet retardé parmi le premier et le second volet (102, 108) qui prend du retard sur un volet avancé parmi le premier et le deuxième volet (102, 108) jusqu'à ce que le volet retardé parmi le premier et le deuxième volet (102, 108) rattrape le volet avancé parmi le premier et le deuxième volet (102, 108).

11. Procédé de commande d'un ou plusieurs volets d'un avion, le procédé comprenant de :
recevoir des premier et deuxième signaux de premiers et deuxième capteurs (120, 122) respectifs couplés à des premier et deuxième actionneurs (112, 114) respectifs fixés de façon mobile à un premier volet (102) d'une première aile (104) de l'avion (106), les premier et deuxième signaux de capteur se rapportant à la position et à la vitesse des premier et deuxième actionneurs (112, 114) ;
comparer les premier et deuxième signaux de capteur pour déterminer une différence entre les premier et deuxième signaux de capteur ; et
ajuster la vitesse d'un ou des deux parmi les premier et deuxième actionneurs (112, 114) en fonction de la différence entre les premier et deuxième signaux de capteur.

12. Procédé selon la revendication 11, dans lequel l'opération d'ajustement comprend de diminuer la vitesse d'un actionneur avancé parmi le premier et le deuxième actionneur (112, 114) qui prend de l'avance sur un actionneur retardé parmi le premier et le deuxième actionneur (112, 114) jusqu'à ce que l'actionneur retardé parmi le premier et le deuxième actionneur (112, 114) rattrape l'actionneur avancé parmi le premier et le deuxième actionneur (112, 114).

13. Procédé selon la revendication 11, comprenant en outre de :
recevoir des troisième et quatrième signaux de capteur depuis les troisième et quatrième capteurs (124, 126) couplés à des troisième et quatrième actionneurs (116, 118) respectifs qui sont fixés de façon mobile à un second volet (108) d'une seconde aile (110) de l'avion (106), les troisième et quatrième signaux de capteur se rapportant tous les deux à une parmi : une position de l'actionneur respectif, une vitesse de l'actionneur respectif, et une position et
une vitesse de l'actionneur (116, 118) respectif ;
comparer les troisième et quatrième signaux de capteur pour déterminer une différence entre les troisième et quatrième signaux ; et
ajuster la vitesse d'un ou des deux parmi les troisième et quatrième actionneurs (116, 118) en fonction de la différence entre les troisième et quatrième signaux.

14. Procédé selon la revendication 13, comprenant en outre de :
déterminer une différence entre une ou les deux parmi la vitesse ou la position des premier et second volets (102, 108) ; et
ajuster la vitesse d'un ou des deux des premier et second volets (102, 108) en fonction de la différence entre une ou les deux parmi la vitesse ou la position des premier et second volets (102, 108).

15. Procédé selon la revendication 14, dans lequel l'opération de détermination de la différence entre un ou les deux de la vitesse ou de la position des premiers et seconds volets (102, 108) comprend d'analyser les premier, deuxième, troisième et quatrième signaux de capteur.
